(19) Europäisches Patentamt
European Patent Office
Office européen des brevets

(11) **EP 2 113 888 A1**

(12) **EUROPEAN PATENT APPLICATION**
published in accordance with Art. 153(4) EPC

(43) Date of publication:
**04.11.2009 Bulletin 2009/45**

(51) Int Cl.:
*G07D 7/00* (2006.01)    *G07D 7/12* (2006.01)

(21) Application number: **08711777.6**

(22) Date of filing: **21.02.2008**

(86) International application number:
**PCT/JP2008/052994**

(87) International publication number:
**WO 2008/105323 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **22.02.2007 JP 2007042292**

(71) Applicant: **Kabushiki Kaisha Toshiba**
**Minato-ku,**
**Tokyo 105-8001 (JP)**

(72) Inventor: **NATORI, Naotake**
**Tokyo 105-8001 (JP)**

(74) Representative: **HOFFMANN EITLE**
**Patent- und Rechtsanwälte**
**Arabellastrasse 4**
**81925 München (DE)**

(54) **DEGREE-OF-STAIN JUDGING DEVICE AND DEGREE-OF-STAIN JUDGING METHOD**

(57)    A contamination degree determining apparatus for paper determines a final contamination degree of paper on the basis of values of various contamination characteristics indicating the degrees of, for example, creases, wrinkles or stains obtained from the paper. Values of a plurality of contamination characteristics are input to the contamination degree determining apparatus for paper. The apparatus calculates a plurality of evaluation values from the plurality of input contamination charac-
teristics, the contribution degree of each of the plurality of contamination characteristics, reference vectors reflecting the distribution of the plurality of contamination characteristics, and dispersion parameters reflecting the distribution of the plurality of contamination characteristics. The apparatus determines the final contamination degree of the paper on the basis of the calculated evaluation values and the weight of each of the evaluation values.

F I G. 11

## Description

Technical Field

The present invention relates to a contamination degree determining apparatus and a contamination degree determining method for determining a final contamination degree of an inspection target such as paper on the basis of a plurality of contamination characteristics (such as creases, wrinkles or stains) detected from the inspection target.

Background Art

For example, Jpn. Pat. Appln. KOKAI Publication No. 7-190955 (Patent document 1) has disclosed a method of obtaining a value in which the amounts of a plurality of contamination characteristics (such as creases, wrinkles or stains) are weighted and linearly coupled together, in determining a finial contamination degree of paper such as paper money from the contamination characteristics.

However, the frequency distribution of contamination characteristics is often nonlinear in general. In such a case, if the contamination characteristics are simply linearly coupled together as in the technique described in Patent document 1 mentioned above, the linearity of the frequency of the contamination degree decreases, which may make it difficult to obtain a desired percentage of contamination determination (percentage of paper determined to be contaminated).

Furthermore, 'D.E. Rumelhart, G.E. Hinton, R.J. Williams: "Learning Representations by back-propagating errors", Nature 323, pp. 533-536. 1986.' (Non Patent document 1) has disclosed a technique which temporarily nonlinearly converts contamination characteristics and linearly couples their values together to improve the linearity of a contamination degree.

The technique described in Non Patent document 1 mentioned above is a technique concerning the application of multilayer perceptron type neural net and its learning method. In addition, the technique of an artificial neural net has originally derived from a simulation of a living body. The technique of the artificial neural net is used in various industrial fields as a nonlinear signal processing system from the aspect of engineering.

However, when the technique described in Non Patent document 1 mentioned above is applied to the determination of the contamination degree of paper, results of learning the contamination characteristics are represented by internal parameters called weight vectors in a black box form (or in a dispersed form). There is thus a problem that it is difficult to adjust the contribution degrees of the respective contamination characteristics in accordance with the form of operation.

Disclosure of Invention

One aspect of this invention is directed to provide a contamination degree determining apparatus and a contamination degree determining method capable of accurately determining the contamination degree of an inspection target in accordance with the form of operation.

A contamination degree determining apparatus as one aspect of this invention comprises: an input unit which inputs values of a plurality of contamination characteristics detected from an inspection target; an evaluation unit which calculates a plurality of evaluation values on the basis of a contribution degree of each of the plurality of contamination characteristics, reference vectors reflecting the distribution of the plurality of contamination characteristics, and dispersion parameters reflecting the distribution of the plurality of contamination characteristics; and a determination unit which determines a contamination degree of the inspection target on the basis of the plurality of evaluation values calculated by the evaluation unit.

A contamination degree determining method as one aspect of this invention comprises: inputting values of a plurality of contamination characteristics detected from an inspection target; calculating a plurality of evaluation values on the basis of a contribution degree of each of the plurality of contamination characteristics, reference vectors reflecting the distribution of the plurality of contamination characteristics, and dispersion parameters reflecting the distribution of the plurality of contamination characteristics; and determining a contamination degree of the inspection target on the basis of the plurality of calculated evaluation values.

Brief Description of Drawings

FIG. 1 is a diagram schematically showing an example of the configuration of a paper processing system to which a contamination degree determining apparatus for paper according to each embodiment is applied;

FIG. 2 is a block diagram schematically showing an example of the configuration of a contamination degree determining apparatus for paper according to a first embodiment;

FIG. 3 is a flowchart for explaining the flow of the whole processing in the contamination degree determining apparatus according to the first embodiment;

FIG. 4 is a flowchart for explaining input processing for inputting contamination characteristics;

FIG. 5 is a flowchart for explaining contribution degree read processing;

FIG. 6 is a flowchart for explaining reference vector read processing;

FIG. 7 is a flowchart for explaining dispersion parameter read processing;

FIG. 8 is a flowchart for explaining evaluation value calculating processing;

FIG. 9 is a flowchart for explaining weight read processing;

FIG. 10 is a flowchart for explaining contamination degree determining processing for determining a final contamination degree of one sheet of paper;

FIG. 11 is a schematic diagram for explaining a local representation type neural net;

FIG. 12 is a diagram showing a reaction characteristic of an intermediate layer unit of the local representation type neural net;

FIG. 13 is a block diagram schematically showing an example of the configuration of a contamination degree determining apparatus for paper according to a second embodiment;

FIG. 14 is a flowchart for explaining the flow of the whole processing in the contamination degree determining apparatus according to the second embodiment;

FIG. 15 is a flowchart for explaining contribution degree setting processing;

FIG. 16 is a block diagram schematically showing an example of the configuration of a contamination degree determining apparatus for paper according to a third embodiment;

FIG. 17 is a flowchart for explaining the flow of the whole processing in the contamination degree determining apparatus according to the third embodiment; and

FIG. 18 is a flowchart for explaining feedback adjusting processing for contribution degrees.

Best Mode for Carrying Out the Invention

Hereinafter, embodiments of the present invention will be described with reference to the drawings.

First explained is a paper processing system to which a contamination degree determining apparatus as each embodiment described below is applied.

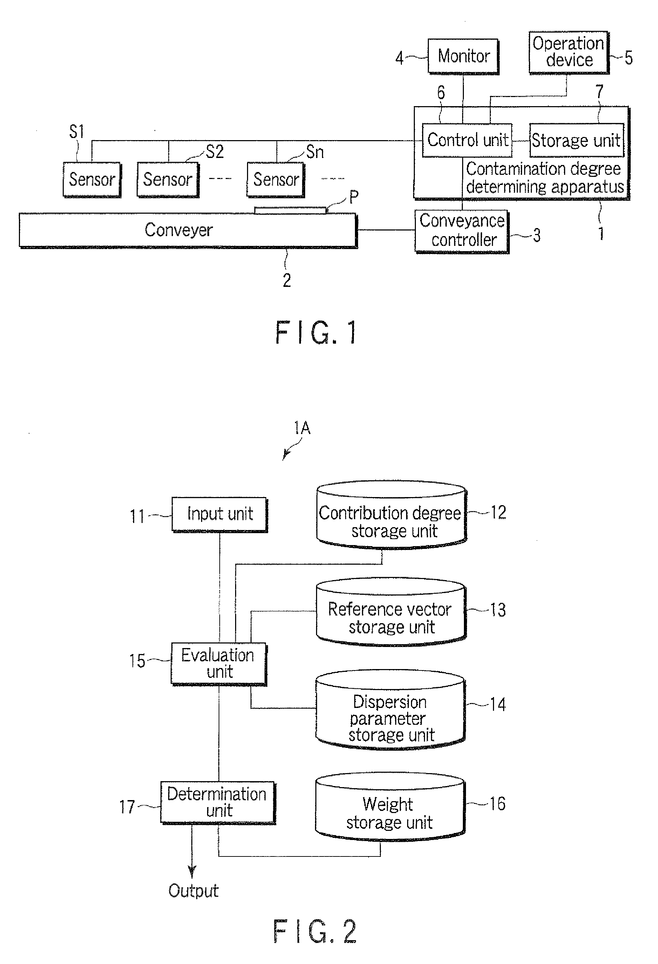

FIG. 1 is a diagram schematically showing an example of the configuration of the paper processing system.

The paper processing system shown in FIG. 1 processes paper as an inspection target on the basis of the result of determining a contamination degree. The paper processing system shown in FIG. 1 comprises a contamination degree determining apparatus 1 (1A, 1B, 1C), a conveyer 2, a conveyance controller 3, various sensors S (S1, S2, ...Sn), a monitor 4 and an operation device 5.

The conveyer 2 is a device for conveying paper P to be an inspection target (target for contamination degree determination). The conveyance controller 3 controls the conveyance of the paper P by the conveyer 2. Each of the sensors S1, S2, ...Sn is a sensor for detecting various contamination characteristics from the paper P conveyed by the conveyer 2.

The contamination degree determining apparatus 1 determines the contamination degree of the paper P as the inspection target. The contamination degree determining apparatus 1 determines the contamination degree of the paper P on the basis of values (various contamination characteristics) detected from the paper P by the sensors. The contamination degree determining apparatus 1 is configured by, for example, a computer capable of data processing by the execution of an application program.

For example, the contamination degree determining apparatus 1 has a control unit 6, a storage unit 7 and various interfaces (not shown), as shown in FIG. 1. In the contamination degree determining apparatus 1, the control unit 6 executes a program stored in the storage unit 7 to achieve various kinds of processing (functions) described later. For example, the control unit 6 executes the program stored in the storage unit 7 such that contamination degree determining processing for paper described in each embodiment is achieved.

Furthermore, the contamination degree determining apparatus 1 is connected to the conveyance controller 3, the monitor 4 and the operation device 4 via various unshown interfaces or to the sensors S. Thus, the contamination degree determining apparatus 1 controls the conveyance state of the paper P conveyed by the conveyer 2 via the conveyance controller 3, displays information on the monitor 4 or acquires information input by an operator through the operation device 5.

First, second and third embodiments of the contamination degree determining apparatuses 1A, 1B, 1C applied to the above-mentioned paper processing system are described below.

The first embodiment is initially described.

FIG. 2 schematically shows an example of the configuration of the contamination degree determining apparatus 1A for paper (inspection target) according to the first embodiment.

The contamination degree determining apparatus 1A for paper shown in FIG. 2 has an input unit 11, a contribution degree storage unit 12, a reference vector storage unit 13, a dispersion parameter storage unit 14, an evaluation unit 15, a weight storage unit 16 and a determination unit 17.

Here, the contribution degree storage unit 12, the reference vector storage unit 13, the dispersion parameter storage unit 14 and the weight storage unit 16 are realized as storage areas in the storage unit 7. The evaluation unit 15 and the determination unit 17 are functions achieved when the control unit 6 executes the program stored in the storage unit 7.

The input unit 11 inputs values of a plurality of contamination characteristics (e.g., values indicating the degrees of creases, wrinkles, stains) obtained from paper as such paper money. For example, the input unit 11 inputs information detected by the sensors S. Moreover, an unshown external device may generate values indicating contamination characteristics from the information detected by the sensors S, and the generated values may be input to the input unit 11.

The contribution degree storage unit 12 stores the contribution degree of each of the plurality of contamination characteristics. The reference vector storage unit 13 stores reference vectors reflecting the distribution of the plurality of contamination characteristics. The dispersion parameter storage unit 14 stores dispersion parameters reflecting the distribution of the plurality of contamination characteristics. The contribution degrees stored in the contribution degree storage unit 12, the reference vectors stored in the reference vector storage unit 13, and the dispersion parameters stored in the dispersion parameter storage unit 14 are described later in detail.

The evaluation unit 15 calculates an evaluation value from the contamination characteristics input by the input unit 11, the contribution degrees stored in the contribution degree storage unit 12, the reference vectors stored in the reference vector storage unit 13, and the dispersion parameters stored in the dispersion parameter storage unit 14. Further, the evaluation unit 15 calculates an evaluation value for each of the various contamination characteristics input by the input unit 11. The weight storage unit 16 stores a weight for each evaluation value. The determination unit 17 determines a final contamination degree of the paper on the basis of evaluation value calculated by the evaluation unit 15 and the weights stored in the weight storage unit 16.

Next, processing executed by the contamination degree determining apparatus for paper as the first embodiment having the above-mentioned configuration is described.

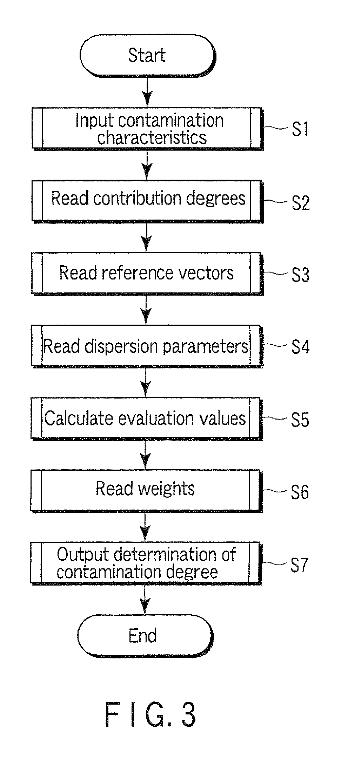

FIG. 3 is a flowchart for explaining the flow of the whole processing in the contamination degree determining apparatus 1A for paper.

First, the input unit 11 performs processing for inputting I contamination characteristics xi to the evaluation unit 15 (step S1). Here, the contamination characteristics mean values (characteristic amounts) quantitatively representing the various degrees of contaminations in paper. For example, the contamination characteristics are values (amounts of sensation) in which, for example, creases, wrinkles or stains are converted into numerical values, or measurement amounts such as density values or differential values.

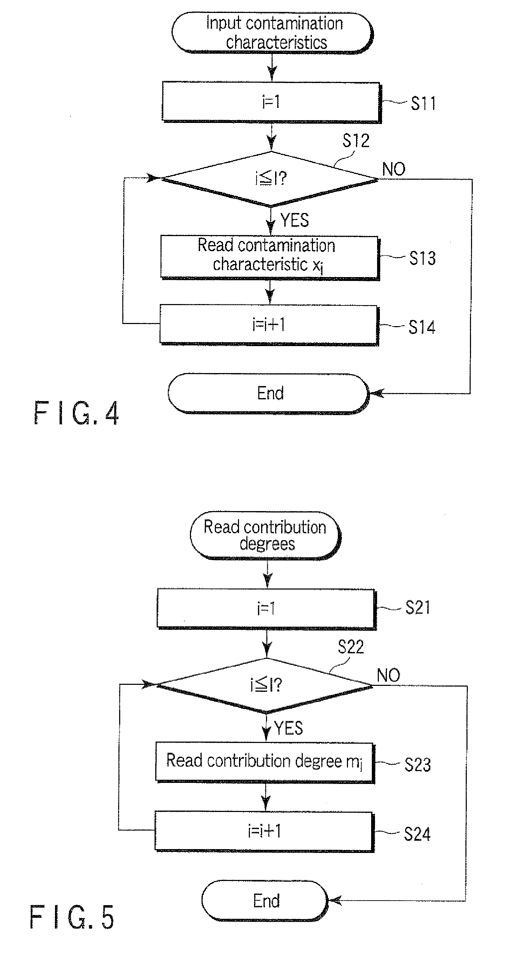

FIG. 4 is a flowchart for explaining input processing for inputting I contamination characteristics. Here, the contamination characteristic input processing is explained with reference to FIG. 4.

As shown in FIG. 4, first, "1" is set to the input unit 11 as an initial value of a variable i (step S11). After setting the variable i at "1", the input unit 11 checks whether or not the variable i is equal to or less than a predetermined value I (step S12). If the variable i is not equal to or less than I, that is, if the variable i is greater than I (step S12, NO), the input unit 11 terminates the input processing of the contamination characteristic $x_i$.

If the variable i is not equal to or less than I (step S12, YES), the input unit 11 inputs the contamination characteristic $x_i$ (step S13). After the contamination characteristic $x_i$ is input, the input unit 11 increments the variable i ("i=i+1") (step S14), and returns to step S12. That is, the input unit 11 repeatedly executes the processing in steps S12 to S14 until the variable i is greater than I. Thus, the input unit 11 inputs I contamination characteristics, and finishes the input processing.

When the input processing by the input unit 11 is finished, the evaluation unit 15 performs read processing for reading a contribution degree $m_i$ for each of I contamination characteristics $x_i$ from the contribution degree storage unit 12 (step S2). Here, a contribution degree is set for each of the contamination characteristics. In other words, the degree of contribution of a certain contamination characteristic to the determination of a final contamination degree is only determined by this value.

FIG. 5 is a flowchart for explaining processing for reading I contribution degrees (contribution degree read processing). Here, the contribution degree read processing is explained with reference to FIG. 5. That is, as the contribution degree read processing, the evaluation unit 15 first sets "1" as the initial value of the variable i (step S21). After setting the variable i at "1", the evaluation unit 15 checks whether or not the variable i is equal to or less than I. If the variable i is not equal to or less than I, that is, if the variable i is greater than I (step S22, NO), the evaluation unit 15 terminates the contribution degree read processing.

If the variable i is equal to or less than I (step S22, YES), the evaluation unit 15 reads the contribution degree

$m_i$ (step S23). After reading the contribution degree $m_i$, the evaluation unit 15 increments the variable i ("i=i+1") (step S24), and returns to step S22. That is, the evaluation unit 15 repeatedly executes the processing in steps S22 to S24 until the variable i is greater than I. Thus, the evaluation unit 15 reads I contribution degrees, and finishes the contribution degree read processing.

Then, the evaluation unit 15 reads

[Equation 1]

$$\bar{p}_j$$

J I-dimensional reference vectors from the reference vector storage unit 13 (step S3). Here, the reference vectors and the dispersion parameters described later reflect the distributions of the contamination characteristics in an 1-dimensional space formed by I contamination characteristics. That is, the distribution of the contamination characteristics can be modeled by a mixed distribution, and probability density distributions constituting the distribution are represented by the above-motioned reference vectors or the later-described dispersion parameters.

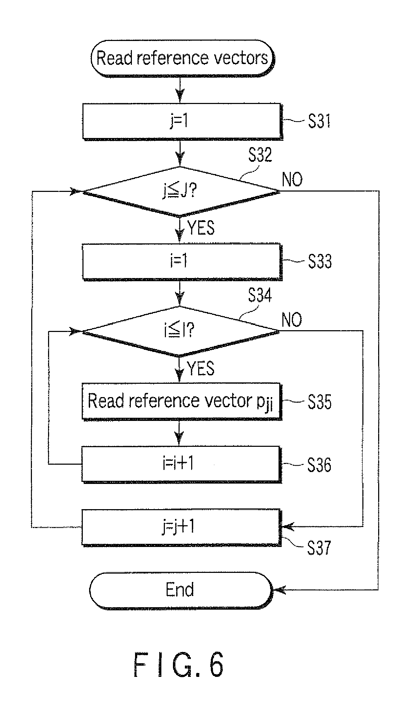

FIG. 6 is a flowchart for explaining processing for reading J I-dimensional reference vectors (reference vector read processing). Here, the reference vector read processing is explained with reference to FIG. 6.

That is, as the reference vector read processing, the evaluation unit 15 first sets "1" as an initial value of a variable j (step S31). After setting the variable j at "1", the evaluation unit 15 checks whether or not the variable j is equal to or less than the J (step S32).

If the variable j is equal to or less than J (step S32, YES), the evaluation unit 15 sets "1" as an initial value of a variable i (step S33). After setting the variable i at "1", the evaluation unit 15 checks whether or not the variable i is equal to or less than I (step S34).

If the variable i is equal to or less than I (step S34, YES), the evaluation unit 15 reads a reference vector $p_{ji}$ (step S35). After reading the reference vector $p_{ji}$, the evaluation unit 15 increments the variable i ("i=i+1") (step S36), and returns to step S34.

If the variable i is not equal to or less than I, that is, if the variable i is greater than I (step S34, NO), the evaluation unit 15 increments the variable j ("j=j+1") (step S37), and returns to step S32. That is, the evaluation unit 15 repeatedly executes the processing in steps S34 to S36 until the variable i is greater than I. By the processing in steps S34 to S36, the evaluation unit 15 reads I reference vectors for the particular variable j.

Furthermore, if the variable j is not equal to or less than J, that is, if the variable j is greater than J (step S32, NO), the evaluation unit 15 terminates the reference vector read processing. That is, the evaluation unit 15 repeatedly executes the processing in steps S32 to S37 until the variable j is greater than J. By the processing in steps S32 to S37, the evaluation unit 15 reads I reference vectors for all the values (1 to J) of the variable j. As a result, the evaluation unit 15 reads JxI reference vectors (J I-dimensional reference vectors).

Then, the evaluation unit 15 reads J dispersion parameters $s_j$ from the dispersion parameter storage unit 14 (step S4).

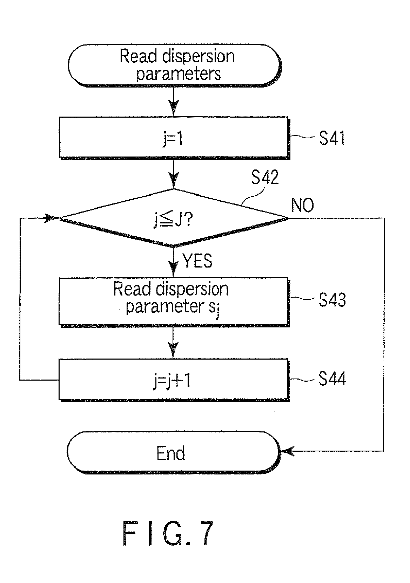

FIG. 7 is a flowchart for explaining processing for reading J dispersion parameters (dispersion parameter read processing). Here, the dispersion parameter read processing is explained with reference to FIG. 7.

That is, as the dispersion parameter read processing, the evaluation unit 15 first sets "1" as an initial value of a variable j (step S41). After setting the variable j at "1", the evaluation unit 15 checks whether or not the variable j is equal to or less than a predetermined value J. If the variable j is not equal to or less than J, that is, if the variable j is greater than J (step S42, NO), the evaluation unit 15 terminates the dispersion parameter read processing.

If the variable j is not equal to or less than J (step S42., YES), the evaluation unit 15 reads a dispersion parameter $s_j$ (step S43). After reading the dispersion parameter $s_j$, the evaluation unit 15 increments the variable j ("j=j+1") (step S44), and returns to step S42. That is, the evaluation unit 15 repeatedly executes the processing in steps S42 to S44 until the variable j is greater than J. Thus, the evaluation unit 15 reads J dispersion parameters, and finishes the dispersion parameter read processing.

Then, the evaluation unit 15 performs evaluation value calculating processing for calculating J evaluation values $y_j$ (step S5). J evaluation values $y_j$ are calculated on the basis of the contamination characteristics $x_i$, the contribution degrees $m_i$, the reference vectors

[Equation 2]

$$\vec{p}_j$$

and the dispersion parameters $s_j$. Calculations of J evaluation values $y_j$ are sent from the evaluation unit 15 to the determination unit 17.

An equation for calculating the evaluation value is, for example, as follow:

[Equation 3]

$$y_j = \exp\left(-\frac{u_j}{2s_j^2}\right), \; u_j = \sum_{i=1}^{I} m_i \left(x_i - p_{ji}\right)^2$$

wherein $u_j$ is the weighted square sum of the difference between the contamination characteristic $x_i$ and the reference vector element $p_{ji}$ due to the contribution degree $m_i$.

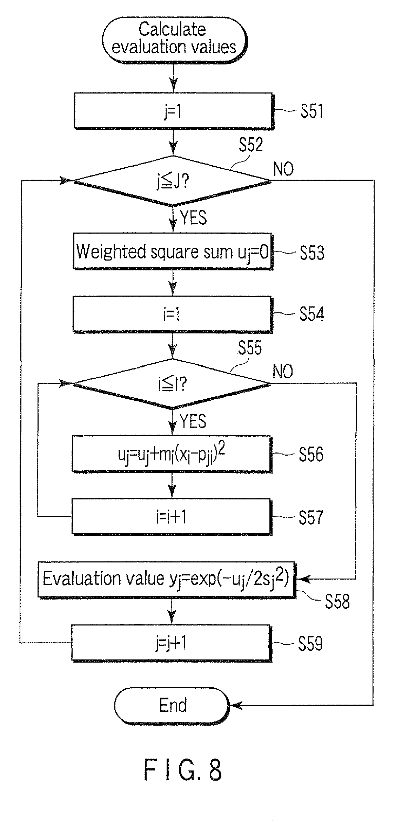

FIG. 8 is a flowchart for explaining evaluation value calculating processing for calculating J evaluation values $y_j$. Here, the evaluation value calculating processing is explained with reference to FIG. 8.

That is, as the evaluation value calculating processing, the evaluation unit 15 first sets "1" as an initial value of a variable j (step S51). After setting the variable j at "1", the evaluation unit 15 checks whether or not the variable j is equal to or less than a predetermined value J (step S52).

If the variable j is equal to or less than J (step S52, YES), the evaluation unit 15 sets the weighted square sum $u_j$ to "0" as an initial value (step S53), and sets "1" as an initial value of a variable i (step S54). After setting "1" as the initial value of the variable i, the evaluation unit 15 checks whether or not the variable i is equal to or less than I (step S55).

If the variable i is equal to or less than I (step S55, YES), the evaluation unit 15 calculates the weighted square sum $u_j$ for the variable i in accordance with a calculation equation "$u_j=u_j+m_i(x_i-p_{ji})^2$" (step S56). Thus, after calculating the weighted square sum $u_j$ for the variable i, the evaluation unit 15 increments the variable i ("i=i+1") (step S57), and returns to step S55.

Furthermore, if the variable i is not equal to or less than I, that is, if the variable i is greater than I (step S55, NO), the evaluation unit 15 calculates the evaluation value $y_j$ for the variable j in accordance with a calculation equation "$y_j=\exp(-U_j/2s_j^2)$" (step S58). After calculating the evaluation value $y_j$ for the variable j, the evaluation unit 15 increments the variable j ("j=j+1") (step S59), and returns to step S52.

That is, the evaluation unit 15 repeats the processing in steps S55 to S57 until the variable i is greater than I, and calculates the evaluation value $y_j$ for the variable j in accordance with step S58. That is, by the processing in steps S55 to S58, the evaluation unit 15 calculates the evaluation value $y_j$ for the variable j.

Furthermore, if the variable j is not equal to or less than J, that is, if the variable j is greater than J (step S52, NO), the evaluation unit 15 terminates the evaluation value calculating processing. That is, the evaluation unit 15 repeatedly executes the processing in steps S52 to S59 until the variable j is greater than J. Thus, the evaluation unit 15 calculates the evaluation values $y_j$ for all the values (1 to J) of the variable j.

Then, the determination unit 17 reads J weights $w_j$ from the weight storage unit 16 (step S6). Here, a weight is set for each of J evaluation values. That is, the weight corresponds to a "mixed parameter" in a mixed distribution model.

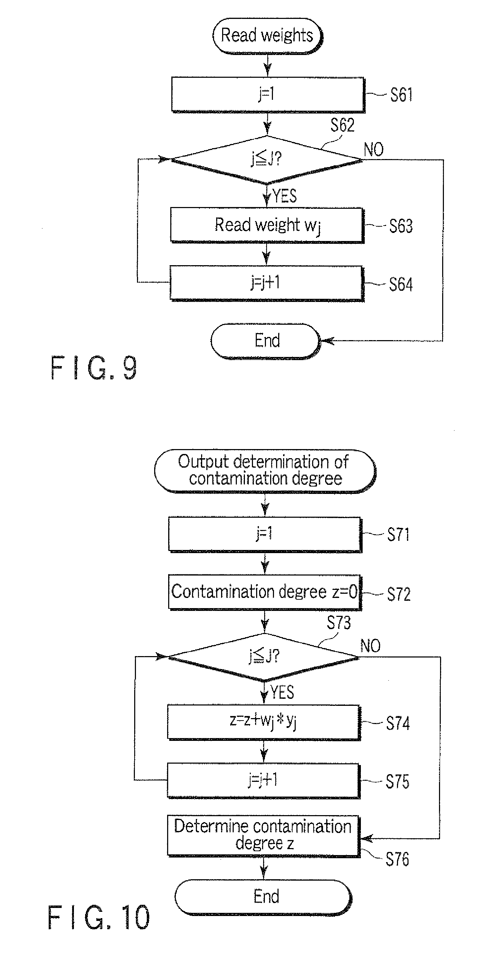

FIG. 9 is a flowchart for explaining processing for reading J weights $w_j$ (weight read processing). Here, the weight read processing is explained with reference to FIG. 9.

That is, as the weight read processing, the determination unit 17 first sets "1" as an initial value of a variable j (step S61). After setting the variable j at "1", the determination unit 17 checks whether or not the variable j is equal to or less than J (step S62). If the variable j is not equal to or less than J, that is, if the variable j is greater than J (step S62, NO), the determination unit 17 terminates the weight read processing.

Furthermore, if the variable j is equal to or less than J (step S62, YES), the determination unit 17 reads the weight $w_j$ (step S63). After reading the weight $w_j$, the determination unit 17 increments the variable j ("j=j+1") (step S64), and returns to step S62. That is, the determination unit 17 repeatedly executes the processing in steps S62 to S64 until the variable j is greater than J. Thus, the determination unit 17 reads J weights, and finishes the weight read processing.

Then, the determination unit 17 determines a final contamination degree z of one sheet of paper targeted for the determination of the contamination degree (step S7). The contamination degree z is determined on the basis of the evaluation value $y_j$ calculated by the evaluation unit 15 and the weight $w_j$ read from the weight storage unit 16. In addition, this contamination degree z is a weighted linear coupling of J evaluation values (not nonlinearly converted)

The final contamination degree z is calculated by, for example, the following calculation equation:

[Equation 4]

$$z = \sum_{j=1}^{J} w_j y_j$$

FIG. 10 is a flowchart for explaining processing for determining a final contamination degree of one sheet of paper. Here, the contamination degree determining processing is explained with reference to FIG. 10.

That is, as the contamination degree determining processing, the determination unit 17 first sets "1" as an initial value of a variable j (step S71). After setting the variable j at "1", the determination unit 17 sets "z-0" as an initial value of the contamination degree z (step S72). After setting the contamination degree z, the determination unit 17 checks whether or not the variable j is equal to or less than J (step S73).

Furthermore, if the variable j is equal to or less than J (step S73, YES), the determination unit 17 calculates the contamination degree z in accordance with a calculation equation "$z=z+w_j{}^*y_j$" (step S74). After calculating the contamination degree z, the determination unit 17 increments the variable j ("j=j+1") (step S75), and returns to step S73. That is, the determination unit 17 repeatedly executes the processing in steps S73 to S75 until the variable j is greater than J.

Furthermore, if the variable j is not equal to or less than J, that is, if the variable j is greater than J (step S73, NO), the determination unit 17 determines the contamination degree z in the case of j=J to be the final contamination degree z of the paper (step S76).

In accordance with the processing described above, the contamination degree determining apparatus 1A according to the first embodiment introduces a static contribution degree to each of the various contamination characteristics in order to determine the contamination degree of each sheet of paper. This makes it possible for the contamination degree determining apparatus 1A to readily achieve optimum weighting of each of the contamination characteristics for determining a comprehensive contamination degree of paper in accordance with the form of operation.

In addition, the first embodiment described above and the second and third embodiments described later are based on the idea of a local representation type neural net. The local representation type neural net is introduced in, for example, Non Patent document 2 below.

'J.E. Moody and C. Darken: "Fast learning in networks of locally-tuned processing units", Neural Computation 1, pp. 281-294. 1989.' (Non Patent document 2).

The concept of the local representation type neural net is described below.

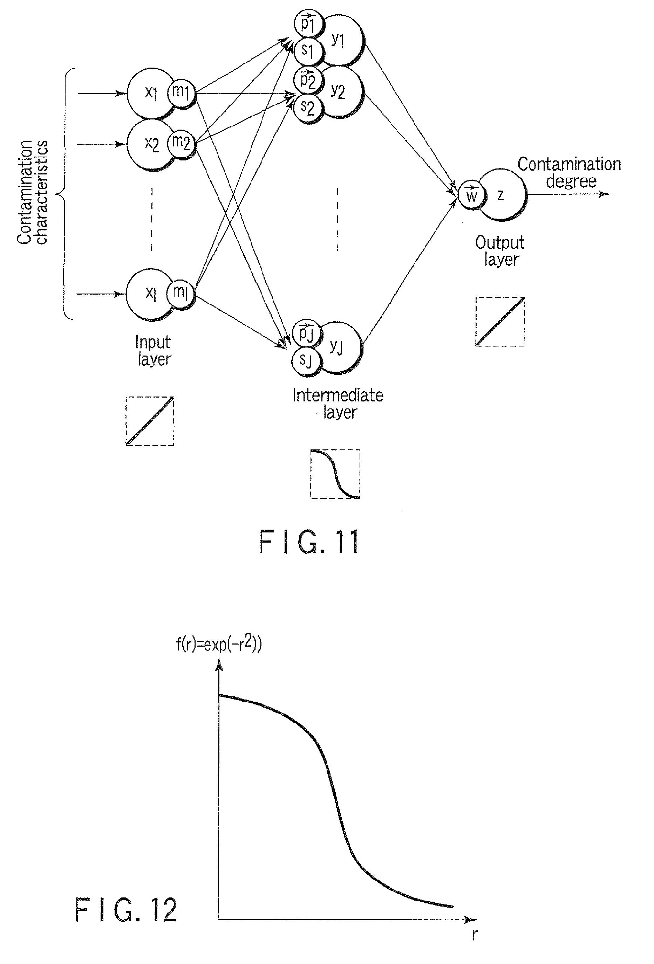

FIG. 11 is a schematic diagram for explaining the local representation type neural net. Further, FIG. 12 is a diagram showing a reaction characteristic of an intermediate layer unit of the local representation type neural net.

Three layers shown in FIG. 11 are an input layer, an intermediate layer (hidden layer) and an output layer. There are one or more units in each layer. Here, the number of input layer units is a number (I) corresponding to the contamination characteristics, and the number of output layer units is one corresponding to the final contamination degree. In addition, the number of intermediate layer units is a number (J) sufficient to obtain desired performance.

In the local representation type neural net, there are no intra-layer couplings and there are inter-layer couplings alone, and a signal is transmitted from the input layer to the output layer in a feedforward manner, as in the three-layer perceptron type neural net described in Non Patent document 1. A reaction characteristic xi of the input layer unit is exactly the value (identity function) of the input contamination characteristics. A reaction characteristic yj of the intermediate layer unit is not a characteristic like a sigmoid function used in the three-layer perceptron type neural net, and is a probability density distribution type characteristic as shown in FIG. 12. A reaction characteristic z of the output layer unit is a linear coupling.

Next, the second embodiment will be described.

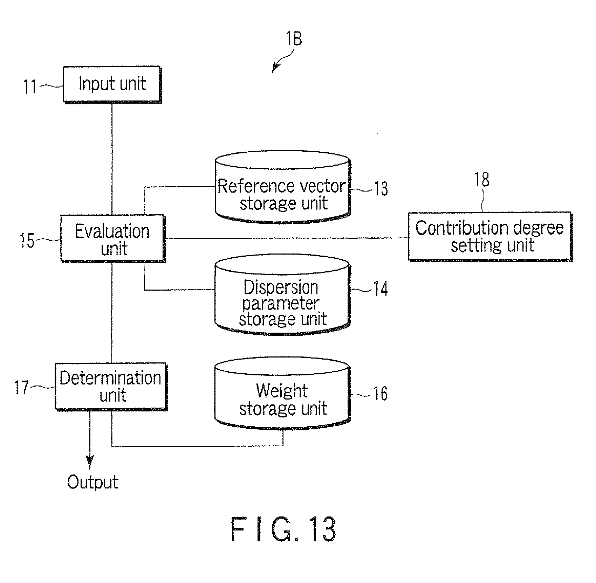

FIG. 13 is a diagram schematically showing an example of the configuration of the contamination degree determining apparatus 1B for paper according to the second embodiment.

The contamination degree determining apparatus 1B shown in FIG. 13 has a configuration in which the contribution degree storage unit 12 in the contamination degree determining apparatus 1A shown in FIG. 2 is replaced with a contribution degree setting unit 18 for setting a contribution degree of each of a plurality of contamination characteristics.

That is, the configuration of the contamination degree determining apparatus 1B is the same as that of the contamination degree determining apparatus 1A described in the first embodiment except for the contribution degree setting unit 18. Therefore, like signs are assignee to like parts, and the configuration of the contamination degree determining apparatus 1B similar to that of the contamination degree determining apparatus 1A is not described in detail.

The contribution degree setting unit 18 sets, for an evaluation unit 15, a contribution degree of each of a plurality of contamination characteristics input by the operator using the operation device 5. In addition, the contribution degree setting unit 17 can be realized, for example, when the control unit 6 executes the program stored in the storage unit 7 in the hardware configuration shown in FIG. 1.

That is, the contamination degree determining apparatus 1B does not accumulate the contribution degrees of the contamination characteristics in contrast with the contamination degree determining apparatus 1A described in the first embodiment, and the contribution degree setting unit 18 sets a contribution degree of each of a plurality of contamination characteristics in accordance with the setting operation by the operator. In other words, the operator is able to set (adjust) the contamination degree in the contamination degree determining apparatus 1B.

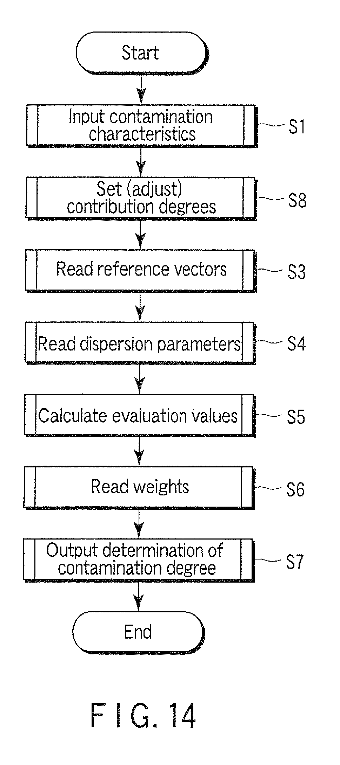

FIG. 14 is a flowchart showing the flow of the whole processing in the contamination degree determining apparatus 1B according to the second embodiment. In the flowchart shown in FIG. 14, step S2 for reading a contribution degree in the flowchart shown in FIG. 3 is replaced with step S8 for contamination degree setting (adjusting) processing. Therefore, in the flowchart shown in FIG. 14, the same signs are assigned to the same parts as those in the flowchart shown in FIG. 3, and these parts are not described in detail.

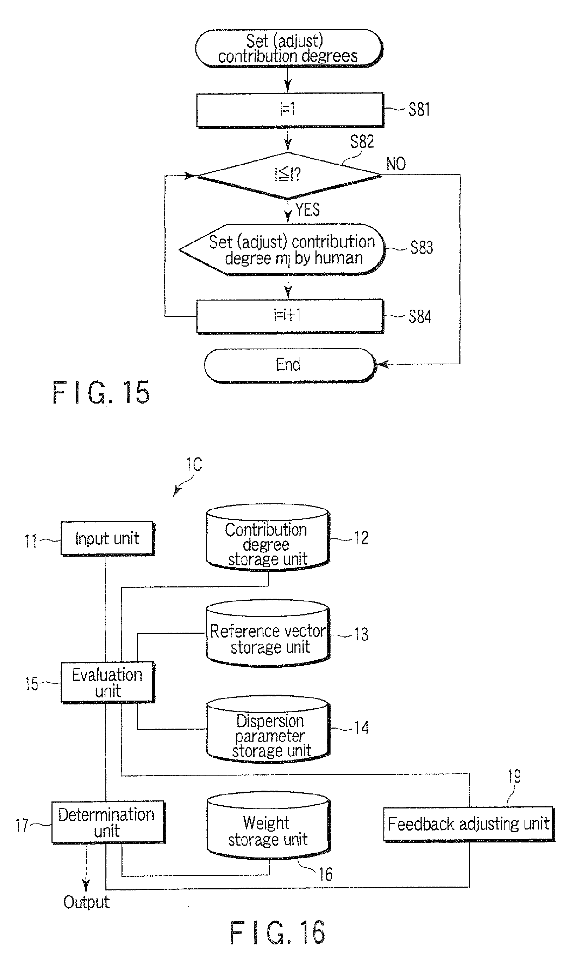

Here, the contamination degree setting processing in step S8 is processing to set (adjust) I contamination degrees input by the operator through, for example, the operation device 5. FIG. 15 is a flowchart for explaining contribution degree setting processing for setting (adjusting) I contribution degrees. The contribution degree setting processing is explained below with reference to FIG. 15.

That is, as the contribution degree setting processing, the contribution degree setting unit 18 first sets "1" as an initial value of a variable i (step S81) . After setting the variable i at "1", the contribution degree setting unit 18 checks whether or not the variable i is equal to or less than I (step S82).

If the variable i is equal to or less than I (step S82, YES), the contribution degree setting unit 18 sets (adjusts) a contribution degree $m_i$ in accordance with the input operation to the operation device 5 by the operator (step S83). After setting the contribution degree $m_i$, the contribution degree setting unit 18 increments the variable i ("i=i+1") (step S84), and returns to step S82. If the variable i is not equal to or less than I, that is, if the variable i is greater than I (step S82, NO), the contribution degree setting unit 18 terminates the contribution degree setting processing.

That is, the contribution degree setting unit 18 repeatedly executes the processing in steps S82 to S84 until the variable i is greater than I. Thus, the contribution degree setting unit 18 finishes the processing for setting I contribution degrees.

When I contribution degrees are set by the contribution degree setting processing described above, the contamination degree determining apparatus 1B determines a final contamination degree of paper P targeted for determination, in accordance with the flow of the processing described in the first embodiment.

Furthermore, in the contamination degree determining apparatus 1B according to the second embodiment, the contribution degree $m_i$ is independent of a reference vector representing a model

$$[\text{Equation 5}]$$

$$\vec{p}_j$$

or a dispersion parameter $s_j$. That is, a contribution degree is statically set for each dimension of the contamination characteristics in the contamination degree determining apparatus 1B. Therefore, the value of the contribution degree $m_i$ does not change (e.g., fixed at, for example, $\forall m_i=1$) due to the acquisition (learning) of a model, and is set or adjusted by the operator as needed in accordance with the type of operation after learning (during operation).

In addition, the second embodiment may be combined with the first embodiment described above to determine the contamination degrees. For example, as to the contribution degrees of the contamination characteristics, the contribution degrees of some of the contamination characteristics alone may be set to the contribution degrees input by the operator, and the contribution degrees of the other contamination characteristics may be read from the storage unit.

Next, the third embodiment will be described.

FIG. 16 is a diagram schematically showing an example of the configuration of the contamination degree determining apparatus 1C for paper according to the third embodiment.

In the configuration of the contamination degree determining apparatus 1C shown in FIG. 16, a feedback adjusting unit 19 for feedback-adjusting an initially set contribution degree in accordance with the determination result in a determination unit 17 is added to the contamination degree determining apparatus 1A shown in FIG. 2 described in the first embodiment. That is, the configuration of the contamination degree determining apparatus 1C is the same as that of the contamination degree determining apparatus 1A described in the first embodiment except for the feedback adjusting unit 19. Therefore, like signs are assigned to like parts, and the configuration of the contamination degree determining apparatus 1B similar to that of the contamination degree determining apparatus 1A is not described in detail.

The feedback adjusting unit 19 adjusts the contribution degree in accordance with the determination result of the contamination degree. That is, the feedback adjusting unit 19 feedback-adjusts an initially set (e.g., at $\forall m_i=1$) contribution degree of each of the contamination characteristics in accordance with the determination result of the contamination degree. For example, the feedback adjusting unit 19 calculates a degree of influence of each of the contamination characteristics, and make an adjustment so that the contribution degrees of the contamination characteristics with lower degrees of influence may be lower. Moreover, one way to calculate an influence degree $E_i$ of the contamination characteristic $x_i$ is, for example, to use an output difference when the contribution degree of the contamination characteristic is temporarily set at zero as in the following equation.

$$E_i = z - z_{mi=0}$$

In addition, the feedback adjusting unit 19 can be realized, for example, when the control unit 6 executes the program stored in the storage unit 7 in the hardware configuration shown in FIG. 1.

Next, the processing in the contamination degree determining apparatus 1C is described.

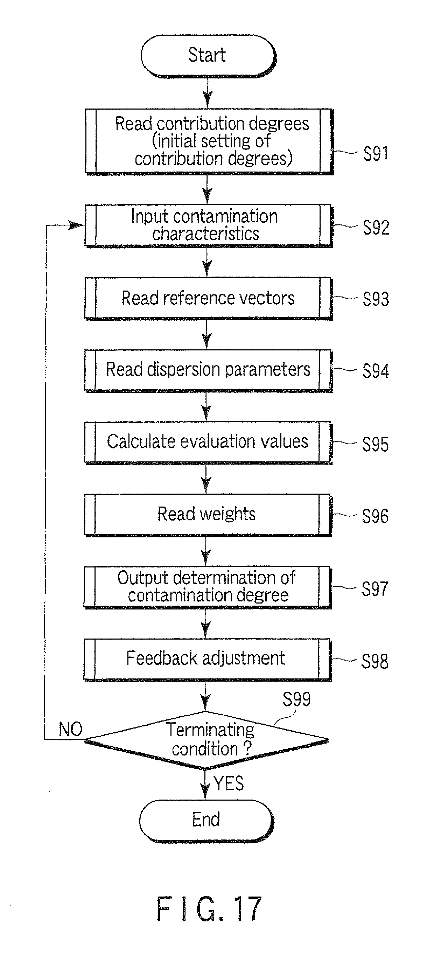

FIG. 17 is a flowchart showing the flow of the whole processing in the contamination degree determining apparatus 1C according to the third embodiment.

That is, the evaluation unit 15 first reads the contribution degree $m_i$ of each of I contamination characteristics from the contribution degree storage unit 12, and sets the read contribution degree $m_i$ as an initial value (step S91). The reading of the contribution degree $m_i$ is similar to the above-mentioned processing in step S2 in FIG. 3. That is, the contamination degree determining apparatus 1C according to the third embodiment starts the processing using, as an initial value, the contribution degree $m_i$ of each of the contamination characteristics stored in the contribution degree storage unit 12.

Then, the input unit 11 inputs I contamination characteristics $x_i$ to the evaluation unit 15 (step S92). The input of the contamination characteristics $x_i$ is similar to the above-mentioned processing in step S1 in FIG. 3. Subsequently, the contamination degree determining apparatus 1C sequentially carries out the reference vector read processing (step S93), the dispersion parameter read processing (step S94), the evaluation value calculating processing (step S95), the weight read processing (step S96) and the contamination degree determining processing (step S97). The processing in steps S93 to S97 is similar to the above-mentioned processing in steps S3 to S7 in FIG. 3.

That is, when the contamination degree z of paper targeted for determination is determined by the determination unit 17, the feedback adjusting unit 19 performs feedback adjusting processing for feedback-adjusting the contribution degree of each of the contamination characteristics set in the evaluation unit 15 in accordance with the determination result in the determination unit 17 (step S98). In this feedback adjusting processing, as described above, for example, a degree of influence of each of the contamination characteristics is calculated, and an adjustment is made so that the contribution degrees of the contamination characteristics with lower degrees of influence may be lower.

After calculating an adjustment value of the contamination degree, the feedback adjusting unit 19 checks whether or not a feedback adjustment terminating condition (a preset number of feedback adjustments) has been reached (step S99). When the feedback adjustment terminating condition has not been reached, the contamination degree determining apparatus 1C returns to step S92, and repeatedly executes the processing in steps S92 to S99. When the feedback adjustment terminating condition has been reached, the contamination degree determining apparatus 1C terminates the processing.

Next, the feedback adjusting processing is described in detail.

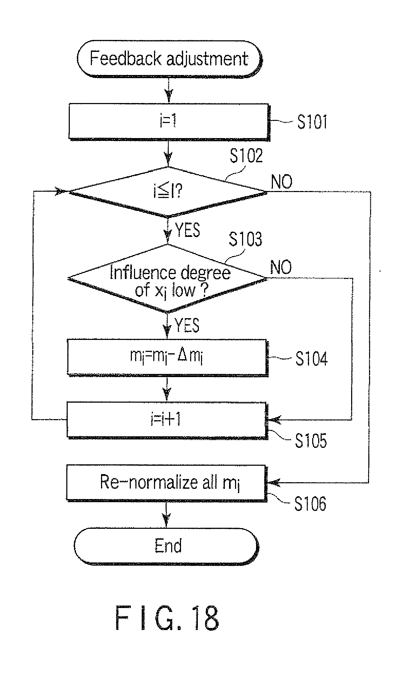

FIG. 18 is a flowchart for explaining the feedback adjusting processing for feedback-adjusting I contribution degrees. The feedback adjusting processing is explained below with reference to FIG. 18.

As shown in FIG. 18, in the feedback adjusting processing, the feedback adjusting unit 19 first sets "1" as an initial value to a variable i (step S101). After setting the variable i, the feedback adjusting unit 19 checks whether or not the variable i is equal to or less than I (step S102).

If the variable i is equal to or less than I (step S102, YES), the feedback adjusting unit 19 checks whether or not the influence degree of the contamination characteristic $x_i$ is low (step S103).

When the influence degree of the contamination characteristic $x_i$ is determined to be low as a result of the check, the feedback adjusting unit 19 performs processing for decreasing the value of the contribution degree $m_i$. For example, the feedback adjusting unit 19 performs processing for decreasing the value of the contribution degree $m_i$ by

$\Delta m_i$ (processing for achieving [$m_i = m_i - \Delta m_i$]) (step S104). After performing the processing for decreasing the contribution degree $m_i$, the feedback adjusting unit 19 increments the variable i ("i=i+1") (step S105), and returns to step S102.

Furthermore, when the influence degree of the contamination characteristic $x_i$ is determined not to be low as a result of the check in step S103, the feedback adjusting unit 19 jumps the processing for decreasing the contribution degree $m_i$ (i.e., the processing in step S104), and increments the variable i ("i=i+1") (step S105), and then returns to step S102.

That is, the feedback adjusting unit 19 repeatedly executes the processing in steps S102 to S105 until the variable i is greater than I.

If the variable i is determined to be not equal to or less than I, that is, if the variable i is determined to be greater than I (step S102, NO), the feedback adjusting unit 19 re-normalizes all the contribution degrees $m_i$ (step S106), and updates all the contribution degrees $m_i$ set in the evaluation unit 15 in accordance with all the normalized contribution degrees $m_i$.

As described above, in the contamination degree determining apparatus 1C according to the third embodiment, each contribution degree of each of the contamination characteristics is optimized in accordance with the determination result of the contamination degree. Moreover, as described above, the results of the feedback adjustment are easily understandable to the operator.

In addition, the third embodiment is not limited to this, and can be carried out in various forms. For example, in the feedback adjustment of the contribution degrees, the contribution degrees of the contamination characteristics with higher degrees of influence may be higher, or the contribution degrees can be optimized by values corresponding to the influence degrees. Moreover, the third embodiment described above may be carried out in combination with the second embodiment. In this case, it is possible to use the contribution degree set by the operator in step S91 as an initial value to achieve the above-mentioned processing shown in FIG. 17.

As described above, according to the embodiments described above, the degree of contribution to the determination of a final contamination degree is independently defined for each of the input contamination characteristics. It is thus possible to provide a contamination degree determining apparatus capable of adapting to the weighting of the contamination characteristics corresponding to the form of operation.

Furthermore, in the contamination degree determining apparatus according to the second embodiment, the value of the contribution degree of each of the contamination characteristics does not change during learning. It is thus possible to set or adjust the value of the contribution degree as needed in accordance with the type of operation after learning (during operation).

Still further, in the contamination degree determining apparatus according to the third embodiment, the contribution degree of each of the contamination characteristics is automatically optimized in accordance with the determination result of the contamination degree. Thus, for example, when a client does not know his own demand, a potential demand of the client can be extracted simply by evaluating a sample, which is easily understandable to the client.

It is to be noted that the contamination degree determining apparatus and the contamination degree determining method according to each of the embodiments are not limited to the determination of the contamination degree of paper, and the apparatus can be applied to the determination of the contamination degree of a target other than paper. Moreover, the contamination degree determining apparatus and the contamination degree determining method according to each of the embodiments are not limited to the determination of the contamination degree. That is, the determining apparatus and the determining method according to each of the embodiments can be applied to detect various characteristic amounts from an inspection target and comprehensively evaluate the characteristics of the inspection target on the basis of the detected various characteristic amounts.

Industrial Applicability

According to one aspect of the present invention, it is possible to provide a contamination degree determining apparatus and a contamination degree determining method capable of accurately determining the contamination degree of an inspection target in accordance with the form of operation.

**Claims**

1. A contamination degree determining apparatus **characterized by** comprising:

    an input unit which inputs values of a plurality of contamination characteristics detected from an inspection target;
    an evaluation unit which calculates a plurality of evaluation values on the basis of a contribution degree of each of the plurality of contamination characteristics, reference vectors reflecting the distribution of the plurality of contamination characteristics, and dispersion parameters reflecting the distribution of the plurality of contamination characteristics; and

a determination unit which determines a contamination degree of the inspection target on the basis of the plurality of evaluation values calculated by the evaluation unit.

2. The contamination degree determining apparatus according to claim 1, **characterized by** further comprising:

a storage unit which stores the contribution degree of each of the plurality of contamination characteristics.

3. The contamination degree determining apparatus according to claim 1, **characterized by** further comprising:

a setting unit which sets the contribution degree of each of the plurality of contamination characteristics on the basis of information input from an operation device operated by an operator.

4. The contamination degree determining apparatus according to claim 1, **characterized by** further comprising:

an adjusting unit which feedback-adjusts the contribution degree on the basis of the determination result of the contamination degree by the determination unit.

5. The contamination degree determining apparatus according to claim 1, **characterized by** further comprising:

a weight storage unit which stores a weight corresponding to each of the evaluation values calculated by the evaluation unit,

wherein the determination unit determines the contamination degree of the inspection target on the basis of the plurality of evaluation values calculated by the evaluation unit and the weight corresponding to each of the evaluation values stored in the weight storage unit.

6. A contamination degree determining method **characterized by** comprising:

inputting values of a plurality of contamination characteristics detected from an inspection target;
calculating a plurality of evaluation values on the basis of a contribution degree of each of the plurality of contamination characteristics, reference vectors reflecting the distribution of the plurality of contamination characteristics, and dispersion parameters reflecting the distribution of the plurality of contamination characteristics; and
determining a contamination degree of the inspection target on the basis of the plurality of calculated evaluation values.

7. The contamination degree determining method according to claim 6, **characterized in that**
the contribution degree of each of the plurality of contamination characteristics is read from a storage unit.

8. The contamination degree determining method according to claim 6, **characterized in that**
the contribution degree of each of the plurality of contamination characteristics is set on the basis of information input from an operation device operated by an operator.

9. The contamination degree determining method according to claim 6, **characterized by** further comprising:

feedback-adjusting the contribution degree on the basis of the determination result of the contamination degree of the inspection target,

wherein the contamination degree of the inspection target is determined on the basis of the plurality of evaluation values calculated by the feedback-adjusted contribution degree of each of the plurality of contamination characteristics, by the reference vectors and by the dispersion parameters.

10. The contamination degree determining method according to claim 6, **characterized by** further comprising:

reading a weight corresponding to each of the evaluation values from a weight storage unit,

wherein the contamination degree of the inspection target is determined on the basis of the plurality of calculated evaluation values and the weight corresponding to each of the evaluation values.

FIG. 1

FIG. 2

```
           ┌──────────────┐
           │    Start     │
           └──────────────┘
                  │
                  ▼
        ┌────────────────────────┐
        │  Input contamination   │ ~ S1
        │    characteristics     │
        └────────────────────────┘
                  │
                  ▼
        ┌────────────────────────┐
        │ Read contribution degrees │ ~ S2
        └────────────────────────┘
                  │
                  ▼
        ┌────────────────────────┐
        │  Read reference vectors │ ~ S3
        └────────────────────────┘
                  │
                  ▼
        ┌────────────────────────┐
        │ Read dispersion parameters │ ~ S4
        └────────────────────────┘
                  │
                  ▼
        ┌────────────────────────┐
        │ Calculate evaluation values │ ~ S5
        └────────────────────────┘
                  │
                  ▼
        ┌────────────────────────┐
        │      Read weights       │ ~ S6
        └────────────────────────┘
                  │
                  ▼
        ┌────────────────────────┐
        │ Output determination of │ ~ S7
        │   contamination degree  │
        └────────────────────────┘
                  │
                  ▼
           ┌──────────────┐
           │     End      │
           └──────────────┘
```

FIG. 3

```
      ┌──────────────────────┐
      │  Input contamination │
      │    characteristics   │
      └──────────┬───────────┘
                 ↓
      ┌──────────────────────┐
      │        i=1           │── S11
      └──────────┬───────────┘
                 ↓        S12
            ╱─────────╲         NO
      ┌────<   i≦I?    >──────────┐
      │    ╲─────────╱            │
      │         ↓ YES             │
      │  ┌──────────────────┐     │
      │  │ Read contamination│── S13│
      │  │ characteristic xᵢ │     │
      │  └────────┬─────────┘     │
      │           ↓               │
      │  ┌──────────────────┐     │
      └──│      i=i+1       │── S14│
         └──────────────────┘     │
                                  ↓
              ┌──────────────────┐
              │       End        │←
              └──────────────────┘
```

$$i \leq I?$$

Read contamination characteristic $x_i$

$$i = i+1$$

# F I G. 4

```
      ┌──────────────────────┐
      │  Read contribution   │
      │      degrees         │
      └──────────┬───────────┘
                 ↓
      ┌──────────────────────┐
      │        i=1           │── S21
      └──────────┬───────────┘
                 ↓        S22
            ╱─────────╲         NO
      ┌────<   i≦I?    >──────────┐
      │    ╲─────────╱            │
      │         ↓ YES             │
      │  ┌──────────────────┐     │
      │  │ Read contribution│      │
      │  │   degree mᵢ      │── S23 │
      │  └────────┬─────────┘     │
      │           ↓               │
      │  ┌──────────────────┐     │
      └──│      i=i+1       │── S24│
         └──────────────────┘     │
                                  ↓
              ┌──────────────────┐
              │       End        │←
              └──────────────────┘
```

$$i \leq I?$$

Read contribution degree $m_i$

$$i = i+1$$

# F I G. 5

15

```
        ╭─────────────────────────╮
        │   Read reference vectors │
        ╰─────────────────────────╯
                    │
                    ▼
        ┌─────────────────────────┐
        │          j=1            │──── S31
        └─────────────────────────┘
                    │            S32
                    ▼
              ◇─────────────◇         NO
              │    j≦J?     │─────────────┐
              ◇─────────────◇             │
                    │ YES                 │
                    ▼                     │
        ┌─────────────────────────┐       │
        │          i=1            │──── S33│
        └─────────────────────────┘       │
                    │            S34       │
                    ▼                     │
              ◇─────────────◇         NO  │
              │    i≦I?     │──────────┐  │
              ◇─────────────◇          │  │
                    │ YES              │  │
                    ▼                  │  │
        ┌─────────────────────────┐    │  │
        │  Read reference vector pji│──── S35
        └─────────────────────────┘    │  │
                    │                  │  │
                    ▼                  │  │
        ┌─────────────────────────┐    │  │
        │         i=i+1           │──── S36
        └─────────────────────────┘    │  │
                    │                  │  │
                    ▼                  │  │
        ┌─────────────────────────┐    │  │
        │         j=j+1           │◄───┘  │
        └─────────────────────────┘       │
                    │            S37       │
                    ▼                     │
        ╭─────────────────────────╮       │
        │          End            │◄──────┘
        ╰─────────────────────────╯
```

# FIG. 6

FIG. 7

Calculate
evaluation values

j=1 — S51

S52

j≦J? — NO

↓YES

Weighted square sum $u_j=0$ — S53

i=1 — S54

S55

i≦I? — NO

↓YES

$u_j=u_j+m_i(x_i-p_{ji})^2$ — S56

i=i+1 — S57

Evaluation value $y_j=\exp(-u_j/2s_j^2)$ — S58

j=j+1 — S59

End

F I G. 8

F I G. 9

F I G. 10

F I G. 11

F I G. 12

FIG. 13

Start

Input contamination characteristics — S1

Set (adjust) contribution degrees — S8

Read reference vectors — S3

Read dispersion parameters — S4

Calculate evaluation values — S5

Read weights — S6

Output determination of contamination degree — S7

End

F I G. 14

Set (adjust) contribution degrees

i=1 — S81

S82

i≤I? — NO

YES

Set (adjust) contribution degree $m_i$ by human — S83

i=i+1 — S84

End

# FIG. 15

1C

11 — Input unit

Contribution degree storage unit — 12

Reference vector storage unit — 13

15 — Evaluation unit

Dispersion parameter storage unit — 14

19

17 — Determination unit

Weight storage unit — 16

Feedback adjusting unit

Output

# FIG. 16

F I G. 17

Feedback adjustment

$i=1$ — S101

$i \leqq I$? — S102 — NO

YES

Influence degree of $x_i$ low ? — S103 — NO

YES

$m_i = m_i - \Delta m_i$ — S104

$i = i + 1$ — S105

Re-normalize all $m_i$ — S106

End

F I G. 18

## INTERNATIONAL SEARCH REPORT

| International application No. |
| --- |
| PCT/JP2008/052994 |

A. CLASSIFICATION OF SUBJECT MATTER
*G07D7/00*(2006.01)i, *G07D7/12*(2006.01)i

According to International Patent Classification (IPC) or to both national classification and IPC

B. FIELDS SEARCHED

Minimum documentation searched (classification system followed by classification symbols)
G07D7/00, G07D7/12

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 6-23968 A  (Toshiba Corp.),<br>01 February, 1994 (01.02.94),<br>Par. Nos. [0046] to [0078]; Figs. 9 to 12<br>(Family: none) | 1-10 |
| A | JP 2005-157732 A  (Oki Electric Industry Co., Ltd.),<br>16 June, 2005 (16.06.05),<br>Par. Nos. [0054] to [0083]; Figs. 7 to 10<br>(Family: none) | 1-10 |
| A | JP 2006-140952 A  (TOA Corp., Step One Ltd.),<br>01 June, 2006 (01.06.06),<br>Par. Nos. [0050] to [0130]; Figs. 4 to 18<br>(Family: none) | 1-10 |

☐ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered  to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination |
| "O" | document referring to an oral disclosure, use, exhibition or other means | | being obvious to a person skilled in the art |
| "P" | document published prior to the international filing date but later than the priority date claimed | "&" | document member of the same patent family |

| Date of the actual completion of the international search | Date of mailing of the international search report |
| --- | --- |
| 20 May, 2008 (20.05.08) | 03 June, 2008 (03.06.08) |

| Name and mailing address of the ISA/<br>Japanese Patent Office | Authorized officer |
| --- | --- |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7190955 A

**Non-patent literature cited in the description**

- **D.E. Rumelhart ; G.E. Hinton ; R.J. Williams.** Learning Representations by back-propagating errors. *Nature,* 1986, vol. 323, 533-536

- **J.E. Moody ; C. Darken.** Fast learning in networks of locally-tuned processing units. *Neural Computation,* 1989, vol. 1, 281-294